# EUROPEAN PATENT APPLICATION

(11) **EP 0 615 895 A1**
(43) Date of publication of application: **21.09.1994**
(21) Application number: 94301934.9
(22) Date of filing: 18.03.1994
(51) Int. Cl.: B62D 43/00

(54) **Security device for the spare wheel of a vehicle**

(30) Priority: 18.03.1993 GB 9305567
(71) Applicant: Lister, Ian, London SW16 4BJ (GB)
(72) Inventor: Lister, Ian, London SW16 4BJ (GB)
(74) Representative: Pedder, James Cuthbert

(57) **Abstract**

A security device (7) for the spare wheel (5) of a vehicle comprises a base portion (9) adapted to be seated against one side of a wheel. Connector means (15) is carried by the base portion (9) and is adapted to pass through an existing aperture in the wheel. The connector means has a threaded bore (31) therein, into which an attachment bolt (33) is threadable, the threaded part of the bolt (33) being adapted to pass through an aperture (43) in a suitable part of the vehicle while the bolt head (49) is prevented from passing through the aperture (43), thereby securing the wheel to that part of the vehicle.

## Description

This invention relates to a security device for the spare wheel of a vehicle.

The majority of motor vehicles today carry one or more spare wheels which can be used to replace a damaged road wheel or tyre so that, for example, a relatively minor incident, such as a puncture, does not cause lengthy delays; the wheel concerned can be replaced leaving the damaged wheel to be repaired by experts at a more convenient time. However, the space taken up by a wheel is relatively large and, in a number of vehicles, particularly cars, room is saved by locating the spare wheel underneath the boot or equivalent area. The wheel being retained in some sort of cage structure which can be lowered, for example by a control situated in the boot, so as to permit access thereto while maintaining the vehicle ground clearance when access is not required.

Unfortunately, because the spare wheel is located outside the vehicle, it has become a target for thieves. While the cage cannot readily be lowered as the controls are located out of reach in the boot, nevertheless it can be a reasonably simple operation to cut through the cage and/or the lowering mechanism using strong bolt cutters, thus rendering the spare wheel removable within seconds.

The present invention seeks to provide a security device for the spare wheel of a vehicle which renders unauthorised access thereto much more difficult, if not impossible.

According to the invention, there is provided a security device for the spare wheel of a vehicle comprising a base portion adapted to be seated against one side of a wheel, connector means carried by the base portion, adapted to pass through an existing aperture in the wheel and having a threaded bore therein, and an attachment bolt threadable into the threaded bore, the threaded part of the bolt being adapted to pass through an aperture in a suitable part of the vehicle while the bolt head is prevented from passing through the aperture, thereby securing the wheel to that part of the vehicle.

Preferably the base portion carries at least one projection alignable with a second aperture in the spare wheel so as to pass thereinto and positively locate the device in set relationship to the wheel.

The projection may be in the form of a threaded element, passing through the wheel aperture, a nut, such as a wing nut, being then threaded onto the threaded element so as to positively secure the security device to the wheel. Suitably the projection comprises a bolt passing through an aperture in the base portion.

The connector means may comprise a spigot projecting from the base portion and this spigot may have a threaded bore at its free end.

The invention will now be described in greater detail, by way of example, with reference to the drawings, in which:-
Figure 1 is a schematic drawing of a security device in accordance with the invention showing the attachment of a spare wheel to the boot floor of a car, and
Figure 2 is an exploded sectional view of the security device shown in figure 1.

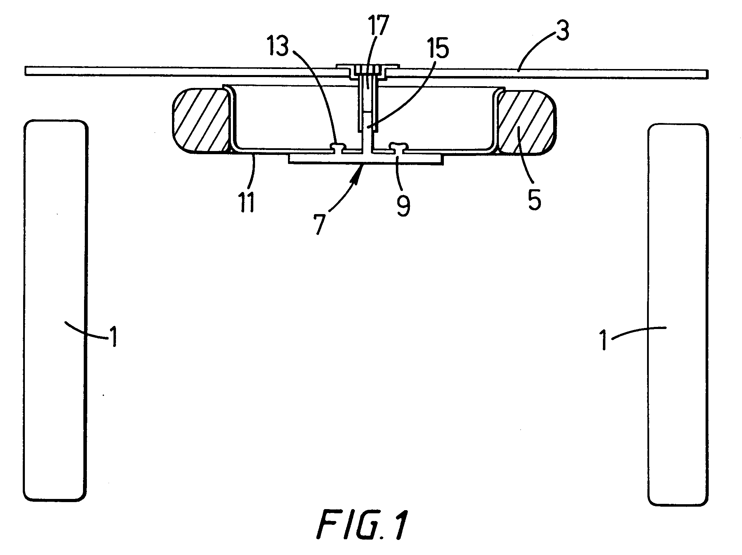

Referring firstly to figure 1, there is indicated diagrammatically the lower rear end of a car, the position of the rear wheels being indicated at 1 and the floor of the boot indicated at 3. Secured in a position beneath the boot floor 3 is a spare wheel 5. The spare wheel is situated in a wire cage (omitted for clarity) which comprises a cage hinged at its rear (towards the front of the vehicle), and held in its raised position by a releasable hook device at its front (to the rear of the vehicle) so as to retain the spare wheel 5 in the position shown. The hook may be movable upwardly and downwardly on a threaded rod controlled from the inside of the boot so that, when lowered, it can be detached from the cage allowing the cage to pivot downwardly and so release the spare wheel 5.

However, while this cage arrangement is suitable for retaining the spare wheel in normal circumstances, it is by no means burglar proof. Thus, in order to further secure the spare wheel against theft, the wheel can be additionally secured to the floor of the boot by means of a security device in accordance with the invention, one form of which is shown at 7.

The security device 7 comprises a base portion 9 adapted to lie against one side 11 of the spare wheel 5 and may suitably be secured thereto by fastening means 13 to be described hereafter. Extending upwardly from the base portion 9 is a connector portion 15 which cooperates with an attachment means 17 whereby it is secured to the boot floor 3. Once the spare wheel 5 is secured in position by the security device 7, it cannot be removed by braking up or removing the usually provided cage. The security device 7 cannot be damaged since only the base portion 9 is accessible from the exterior, access to the other parts being prevented by being located within the wheel or from within the boot.

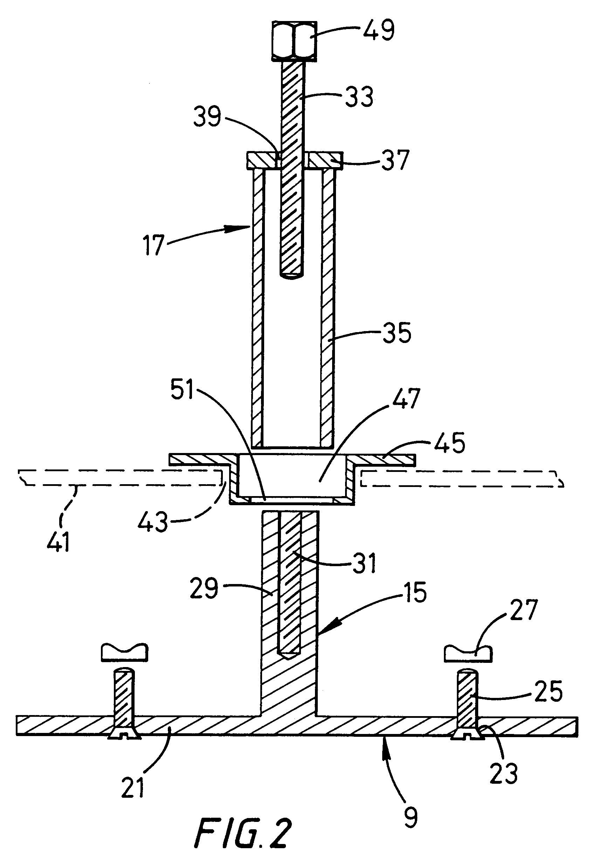

Figure 2 shows an enlarged, exploded sectional view of the security device 7 shown in figure 1. To this end, the base portion 9 of the device comprises a flat plate 21 from which the connector means 15 projects upwardly. The plate 21 is preferably circular so as to correspond in shape to the wheel 5 but may be of any desired shape such as square, hexagonal etc.

The plate 21 additionally is apertured at 23 to receive two bolts 25 associated with wing nuts 27. These bolts are intended to be aligned with the attachment holes in the wheel (i.e. those designed to receive the wheel bolts) so that the base plate 21 can be secured positively to the wheel 5. If the device 7 is intended to be usable with different makes of car, and thus with wheels having differently arranged bolt holes, a number of holes may be provided, the bolts 25 being used with the appropriate holes 23. Alternatively, in order to deal with wheels having different diameters, the holes 23 could be replaced by slots. With rectangular slots or square holes, bolts of the coach bolt type could be used.

The connector means 15 comprises a spigot 29, preferably of square section having a threaded bore 31 located towards its free end to receive a fixing bolt 33. Suitably, this fixing bolt may have a head which is of the same dimensions as the vehicle wheel nuts/bolts so that it can be operated using the standard wheel replacement tools provided with the vehicle.

On to the spigot 29 may be slid a square section tube 35 of a dimension suitable to allow it to be slid over the spigot 29 and through which the fixing bolt 33 passes. The tube 35 is substantially closed at one end by means of a washer 37, braised, welded or otherwise attached to the tube 35. This washer 37, which may be of square shape to match the tube 35 or may be circular and, has a circular aperture 39 for passage of the bolt 33. It is also of larger dimensions than the tube 35 for a purpose to be described.

The boot floor, which is indicated in this figure by broken lines at 41 is provided with an aperture 43 in which is seated a recessed floor plate 45. This plate 45 has a recess 47 adapted to receive therein the washer 37 and the head 49 of the bolt 33. The base of the floor plate 45 has a circular aperture 51 therein for the passage of the tube 35, the tube being prevented from passing totally through the aperture 51 because the washer 37 is of larger dimensions than the aperture 51.

The set up and use of the device will now be considered:-

In order to use the device, the only modification to the car is the provision of the aperture 43 in which the floor plate 45 sits. The floor plate may be secured in this aperture by any suitable means if required or may be left free therein.

In order to use the device, the base plate 21 is positioned against the side of the spare wheel 5 which normally faces the exterior when in use on the car, the spigot 29 being pushed through the central aperture therein. Two of the apertures 23 are aligned with two of the attachment holes in the wheel 5, whereupon the bolts 25 are inserted through the apertures 23 and the attachment holes and are secured therein by means of the wing nuts 27, thus securing the plate 21 positively to the wheel 5. The wheel 5 is then placed in the cage and lifted into position, the cage being hooked onto the retaining hook. The wheel should then be in position with the spigot 29 aligned with the aperture 47 in the floor plate 45, but if it is not, the wheel can be moved slightly until it is. The location of the spigot can be assessed through the aperture 47.

The tube 35 is then fed through the floor plate 45 and slid over the spigot 29. The bolt 33 is passed through the tube 35, screwed into the threaded bore 31 and tightened until the wheel 5 is retained securely against the underside of the boot floor 3. The cage catch can then be finally tightened.

To access the spare wheel 5, the procedure is reversed.

It will be appreciated that various modifications may be made to the above described embodiment without departing from the scope of the invention. For example, if desired, the tube 35 and washer 37 could be omitted, thus simplifying the device. Although the spigot 29 and tube 35 have been described as of square cross section, they may if desired have a different cross section such as circular. However, it will be appreciated that a circular section may not as secure as a non circular section as it may be possible to remove the wheel by rotating it so as to unscrew the bolt 33 from the threaded bore 31.

Also, should it not be possible to locate the floor aperture coaxially with the wheel axis, due, for example to the structure of the car, the spigot 29 could be located slightly offset to compensate for this. If it is desired that the device be used with a number of different makes of vehicle, the spigot could be of a larger width\diameter, the spigot then having both a central threaded bore together with one or more offset threaded bores. The offset bore(s) may, if desired, be inclined relative to the axis of the spigot. In another form, the arrangement could be such that the spigot 29 passes through one of the wheel attachment holes instead of through the central aperture.

The specially shaped floor plate 45 could be replaced by a simple flat plate with a suitable aperture.

## Claims

1. A security device (7) for the spare wheel (5) of a vehicle comprising a base portion (9) adapted to be seated against one side of a wheel (5), connector means (15) carried by the base portion (9), adapted to pass through an existing aperture in the wheel (5) and having a threaded bore (31) therein, and an attachment bolt (33) threadable into the threaded bore (31), the threaded part of the bolt (33) being adapted to pass through an aperture (43) in a suitable part of the vehicle while the bolt head (49) is prevented from passing through the aperture (43), thereby securing the wheel to that part of the vehicle.

2. A security device as claimed in claim 1, wherein the base portion (9) carries at least one projection (25) alignable with a second aperture in the spare wheel (5) so as to pass thereinto and positively locate the device (7) in set relationship to the wheel (5).

3. A security device as claimed in claim 2, wherein the projection (25) is in the form of a threaded element, passing through the second wheel aperture , a nut (27) being then threaded onto the threaded element so as to positively secure the security device (7) to the wheel (5).

4. A security device as claimed in claim 3, wherein the nut (27) is a wing nut.

5. A security device as claimed in claim 2, 3 or 4, wherein the projection (25) comprises a bolt passing through an aperture (23) in the base portion (9).

6. A security device as claimed in any preceding claim, wherein the connector means (15) comprises a spigot projecting from the base portion (9) and having a threaded bore (31) at its free end.

7. A security device as claimed in any preceding claim, wherein a plate (45) is provided for seating against the interior of a part of the vehicle to the exterior of which the wheel (5) is to be attached, the plate (45) being apertured for the passage of the attachment bolt (33).
